# EUROPEAN PATENT APPLICATION

(11) **EP 2 495 726 A2**
(43) Date of publication of application: **05.09.2012**
(21) Application number: 12157809.0
(22) Date of filing: 01.03.2012
(51) Int. Cl.: G11B 17/04

(54) **Cover assembly of optical disk device**

(30) Priority: 04.03.2011 TW 100107305
(71) Applicant: Pegatron Corporation, Taipei City 112 (TW)
(72) Inventor: Chen, Ku-Feng, Taipei City 112 (TW)
(74) Representative: Liedtke, Markus

(57) **Abstract**

A cover assembly of the optical disk device is disclosed. The cover assembly includes a panel, a cover, a rotating plate, and an elastic member. The panel is disposed on an electronic apparatus and includes an opening. The cover is disposed in front of the opening to shield the opening and the optical disk device. The rotating plate includes a first pivoting member and a second pivoting member. The first pivoting member is connected to the panel, and the second pivoting member is connected to the cover. The first pivoting member is located at an end of a first side of rotating plate, and second pivoting member is located at an end of a second side of rotating plate. The first side and second side of rotating plate are opposite. The panel includes a first connecting member inside, and the cover includes a second connecting member. One end of elastic member is connected to the first connecting member of the panel, and the other end of elastic member is connected to the second connecting member of the cover to recover the cover.

## Description

### BACKGROUND

### 1. Technology Field

The disclosure relates to an electronic apparatus; in particular, to a cover assembly of an optical disk device.

### 2. Description of the related art

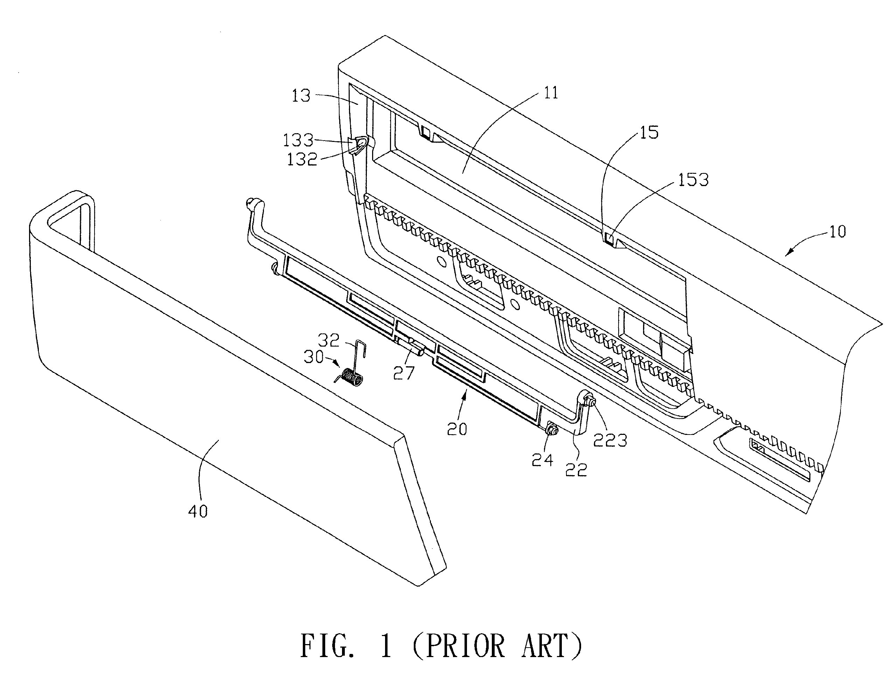

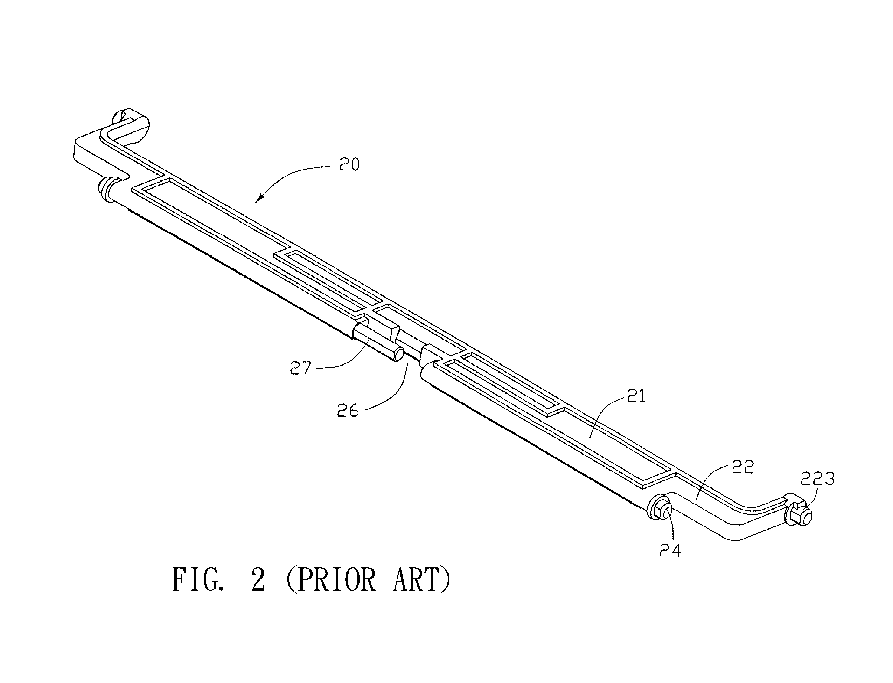

In general, the optical disk device (e.g., a CD-ROM) is mostly disposed in the case of an electronic apparatus, and a plurality of optical disk devices openings is correspondingly disposed on the panel of the case of the electronic apparatus. In order to meet the dust-proof and appearance requirements, a cover (or a door) will be usually disposed in front of the CD-ROM opening. In some related arts, the main structure of the cover assembly of the optical disk device is shown as FIG. 1 and FIG. 2.

Please refer to FIG. 1 and FIG. 2. As shown in FIG. 1 and FIG. 2, the conventional cover assembly includes a panel 10, a pivot pole 20, an elastic member 30, and a cover 40. The elastic member 30 used in the cover assembly is a torsion spring. The panel 10 is disposed on the front part of the electronic apparatus (not shown in the figures), and the opening 11 is disposed on the panel 10 for the tray of the optical disk device moving in and out the electronic apparatus. Two inner walls 13 of the panel 10 are disposed at two sides of the opening 11, and a pivoting hole 132 is disposed at the central part of each inner wall 13. An inclined surface 133 is formed on the opening near the pivoting hole 132 of each inner wall 13 at the front side of the panel 10. The panel 10 forms two compartments above the opening 11, and the retaining members 15 of the notches 153 are disposed in the two compartments.

The pivot pole 20 includes a long body member 21, and the upper parts of the two ends of the body member 21 extend an L-shaped fixing arm 22 outward and upward along the radial direction respectively, and an end of each L-shaped fixing arm 22 extends a first shaft 223 outward. The lower parts of the two ends of the body member 21 extend a second shaft 24 outward along the radial direction respectively. A containing groove 26 is upward disposed on the bottom of the body member 21, and the body member 21 extends a fixing pole 27 toward the containing groove 26 from an end of the containing groove 26.

In the conventional cover assembly of the optical disk device, the cover 40 is pivoted to the pivot pole 20, and the pivot pole 20 and the cover 40 are disposed on the panel 10 through a first pivoting mechanism to achieve the installation of pivoting the cover 40.

### SUMMARY

Therefore, an embodiment of the invention is to provide a cover assembly of the optical disk device. In the embodiment, the cover assembly is disposed on an electronic apparatus. The cover assembly includes a panel, a cover, a rotating plate, and an elastic member. The panel is disposed on the electronic apparatus, and the panel includes an opening. The inner side of the panel includes a first connection member. The cover is disposed in front of the opening to shield the open and the optical disk device, and the cover includes a second connection member. The rotating plate includes a first pivoting member and a second pivoting member. The first pivoting member connects with the panel and the second pivoting member connects with the cover. The first pivoting member and the second pivoting member are disposed at a first side and a second side of the rotating plate respectively, wherein the first side and the second side are opposite to each other. One end of the elastic member connects with the first connection member of the panel, and the other end of the elastic member connects with the second connection member of the cover to make the cover back to its original position after the cover is released.

In an embodiment of the invention, the rotating plate is an H-shape rotating plate.

In an embodiment of the invention, the panel includes a fixing member and the first pivoting member includes a pivoting hole. The fixing member of the panel is pivoted with the pivoting hole of the first pivoting member.

In an embodiment of the invention, the cover includes a movable member and the second pivoting member includes a pivoting axis. The movable member of the cover is pivoted with the pivoting axis of the second pivoting member.

In an embodiment of the invention, the rotating plate further includes another first pivoting member and another second pivoting member. The first pivoting member is located at one end of the first side of the rotating plate, and the second pivoting member is located at one end of the second side of the rotating plate. The another first pivoting member is located at the other end of the first side of the rotating plate, and the another second pivoting member is located at the other end of the second side of the rotating plate.

In an embodiment of the invention, the elastic member is an extension spring, and the elasticity modulus of the extension spring ranges between 1.0 gf/mm and 2.3 gf/mm.

In an embodiment of the invention, the cover includes an open end. When the cover is rotated by a pushing force, the open end of the cover will be rotated away from the panel from a first position to a second position, and the elastic member is driven by the cover and converted from an original state into a stretching state. When the cover is released, the elastic member will be converted back to the original state from the stretching state to make the cover back to its original position.

In an embodiment of the invention, the cover further includes a fixing end, and the fixing end is connected with the panel. When the cover is acted by the pulling force, the open end of the cover will be rotated about the fixing end.

In an embodiment of the invention, an angle smaller than or equal to 90° is existed between the first position and the second position.

In an embodiment of the invention, the panel includes two inner walls at two sides of the opening. A containing space is existed between each inner wall and the cover, and the containing space is used for the other end of the elastic member connecting with the second connecting member of the cover.

In an embodiment of the invention, the cover includes a side surface, and an angle of 10°∼25° is existed between the each inner wall of the panel and the side surface of the cover.

Above all, the embodiment of the cover assembly uses two ends of the rotating plate to connect with the panel and the cover respectively, and uses the motion of the extension spring and the rotating plate to avoid the interference caused by the cover size to the rotation of the rotating plate. Compared to the related art, the cover assembly of the optical disk device has many advantages such as smaller tooling size, lower cost, lighter weight, simpler structure, and stably fixed and hard to shake, therefore, the drawbacks of the prior art can be effectively improved, and the optical disk device may be operated more smooth no matter it is under the open state or the closed state.

The advantage and spirit of the invention may be understood by the following detailed descriptions together with the appended drawings.

### BRIEF DESCRIPTION OF THE APPENDED DRAWINGS

FIG. 1 and FIG. 2 illustrate a schematic diagram of the conventional cover assembly of the optical disk device.
FIG. 3 illustrates a schematic diagram of the cover assembly in an embodiment of the invention.
FIG. 4∼FIG. 6 illustrate side views of the state that the cover is vertical to the panel when the entire tray of the optical disk device extends out of the opening until the state that the cover is parallel to the panel when the tray does not extend out of the opening.
FIG. 7 illustrates a top view of an angle between the inner wall of the panel and the side surface of the cover.

### DETAILED DESCRIPTION

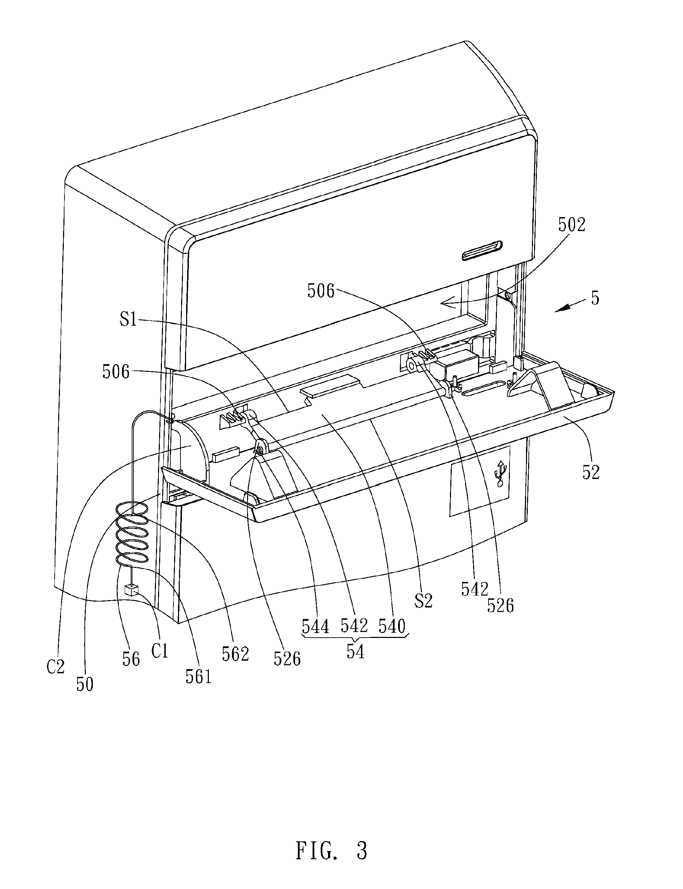

A preferred embodiment of the invention is a cover assembly of the optical disk device. In this embodiment, the cover assembly is disposed on an electronic apparatus, and the cover assembly uses the motion of an extension spring and a rotating plate to avoid the interference caused by the cover size to the rotation of the rotating plate. Please refer to FIG. 3. FIG. 3 illustrates a schematic diagram of the cover assembly in this embodiment.

As shown in FIG. 3, the cover assembly 5 includes a panel 50, a cover 52, a rotating plate 54, and an elastic member 56. In this embodiment, a body member 540 of the rotating plate 54 is in an H shape. The axle distance of the H-shaped rotating plate 54 is smaller than that of the L-shaped rotating plate of the prior art, the shake generated by the rotation of the rotating plate may be reduced. In practical applications, an extension spring can be used as the elastic member 56, and the elasticity modulus of the extension spring ranges between 1.0 gf/mm and 2.3 gf/mm, but not limited to this.

In this embodiment, the panel 50 is disposed on the front part of the electronic apparatus (not shown in the figures), and a opening 502 is disposed on the panel 50 for the tray of the optical disk device moving in and out the electronic apparatus.

In this embodiment, in order to meet the dust-proof and appearance requirements, the cover 52 is disposed in front of the opening 502 to shield the CD-ROM opening 502 when the tray of the optical disk device does not move out of the opening 502. The cover 52 has a fixing end 522 and an open end 524. The fixing end 522 is connected with the panel 50. When the cover 52 is acted by the pushing force of the tray, the cover 52 will be rotated about the fixing end 522, so that the open end 524 of the cover 52 will be rotated away from the panel 50 from a first position to a second position.

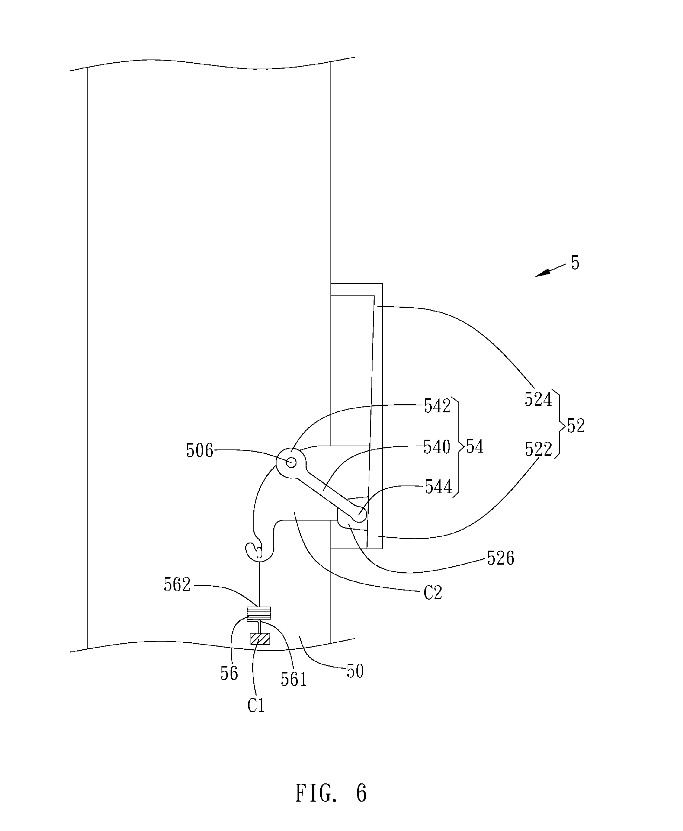

In fact, the angle that the open end 524 is rotated from the first position to the second position is smaller than or equal to 90°. That is to say, when the tray does not move out of the opening 502, the tray will not provide pushing force to the cover 52, therefore, the cover 52 will be still disposed in front of the opening 502 and parallel to the panel 50. When the tray moves out of the opening 502, the tray will provide pushing force to the cover 52, and the open end 524 of the cover 52 will rotate outward about the fixing end 522(shown in Fig. 6). At most, the open end 524 rotates to the state that the cover 52 is vertical to the panel 50, so that the entire tray may be extended out of the opening 502 without being blocked by the cover 52, and the user may easily put a disc on the tray or remove the disc from the tray, but not limited to this.

In this embodiment, the rotating plate 54 has the body member 540, a first pivoting member 542 and a second pivoting member 544. Wherein, the first pivoting member 542 is connected with the panel 50, and the second pivoting member 544 is connected with the cover 52. In more detail, the rotating plate 54 is pivoted with the panel 50 through the first pivoting member 542 and pivoted with the cover 52 through the second pivoting member 544. The first pivoting member 542 and the second pivoting member 544 are disposed at a first side S1 and a second side S2 of the rotating plate 54 respectively, wherein the first side S1 and the second side S2 of the rotating plate 54 are opposite to each other.

In fact, the rotating plate 54 may further include another first pivoting member 542 and another second pivoting member 544. The first pivoting member 542 and the second pivoting member 544 are disposed at one end of the first side S1 and a second side S2 of the rotating plate 54, respectively. The another first pivoting member 542 is located at the other end of the first side S1 of the rotating plate 54, and the another second pivoting member 544 is located at the other end of the second side S2 of the rotating plate 54. That is to say, the two first pivoting members 542 connecting with the panel 50 and the two second pivoting member 544 connecting with the cover 52 are disposed at two ends of the first side S1 and two ends of the second side S2 of the H-shaped rotating plate 54.

The first pivoting members 542 may be a pivoting hole used to be pivoted with a fixing member 506 (e.g., a pivoting axis) of the panel 50; the second pivoting member 544 may be a pivoting axis used to be pivoted with a movable member 526 (e.g., a pivoting hole) of the cover 52, but not limited to this. In fact, the first pivoting members 542 may be also a pivoting axis used to be pivoted with the fixing member 506 (e.g., a pivoting hole) of the panel 50; the second pivoting member 544 may be also a pivoting hole used to be pivoted with a movable member 526 (e.g., a pivoting axis) of the cover 52.

In this embodiment, the inner side of the panel 50 has a first connecting member C1 and the cover 52 has a second connecting member C2. A first end 561 of the elastic member 56 connects with the first connecting member C1 of the panel 50, and a second end 562 of the elastic member 56 connects with the second connecting member C2 of the cover 52 to make the cover 52 back to its original position.

When the cover 52 moves outward by the pushing force of the tray, the open end 524 of the cover 52 will be rotated away from the panel 50 from the first position to the second position, and the elastic member 56 is driven by the cover 52 and converted from an original state into a stretching state. That is to say, the elastic member 56 will be stretched by the outward rotation of the cover 52. When the pushing force acted on the cover 52 is released, the elastic member 56 will be converted back to the original state from the stretching state to make the cover 52 to quickly back to the original position parallel to the panel 50.

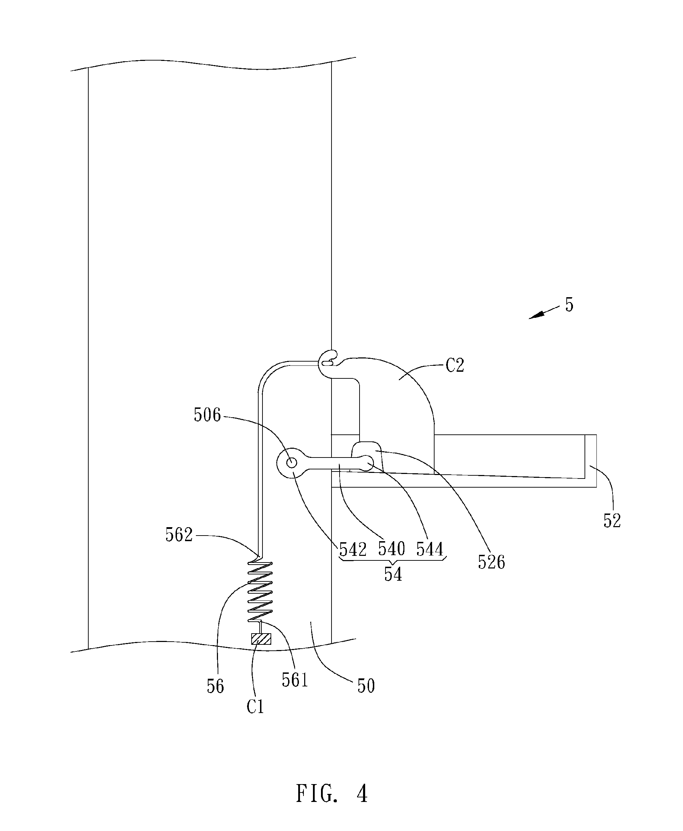

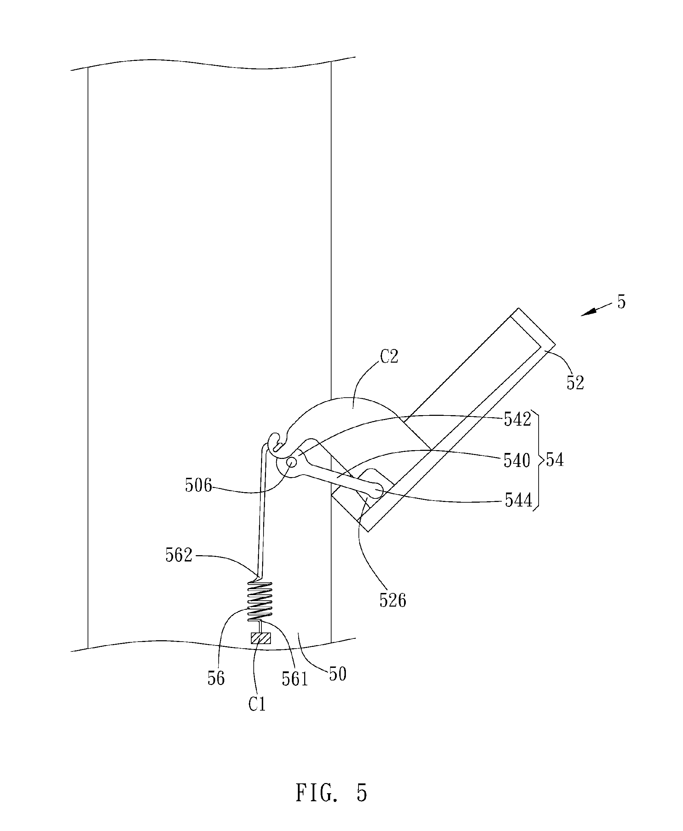

Please refer to FIG. 4 through FIG. 6. FIG. 4 through FIG. 6 illustrate side views of the state that the cover 52 is vertical to the panel 50 when the entire tray extends out of the opening 502 until the state that the cover 52 is parallel to the panel 50 when the tray does not extend out of the opening 502. As shown in FIG. 4 through FIG. 6, when the entire tray extends out of the opening 502, the cover 52 will be vertical to the panel 50. At this time, the H-shaped rotating plate 54 coupled between the panel 50 and the cover 52 will be approximately vertical to the panel 50. In the process of the tray moving back through the opening 502, the H-shaped rotating plate 54 provides rotation and movement. When the entire tray moves back into the opening 502, the H-shaped rotating plate 54 coupled between the panel 50 and the cover 52 will be approximately parallel to the panel 50.

On the contrary, as shown in an order of FIG. 6 through FIG. 4, because the tray of FIG. 6 does not move out of the opening 502, the cover 52 will maintain the state of being parallel to the panel 50, and the H-shaped rotating plate 54 coupled between the panel 50 and the cover 52 will be approximately parallel to the panel 50. In the process of the tray moving out of the opening 502, the cover 52 will be rotated outward, and the H-shaped rotating plate 54 coupled between the panel 50 and the cover 52 can provide both rotation and movement accordingly. As shown in FIG. 4, when the entire tray extends out of the opening 502, the cover 52 will be vertical to the panel 50. At this time, the H-shaped rotating plate 54 coupled between the panel 50 and the cover 52 will be approximately vertical to the panel 50.

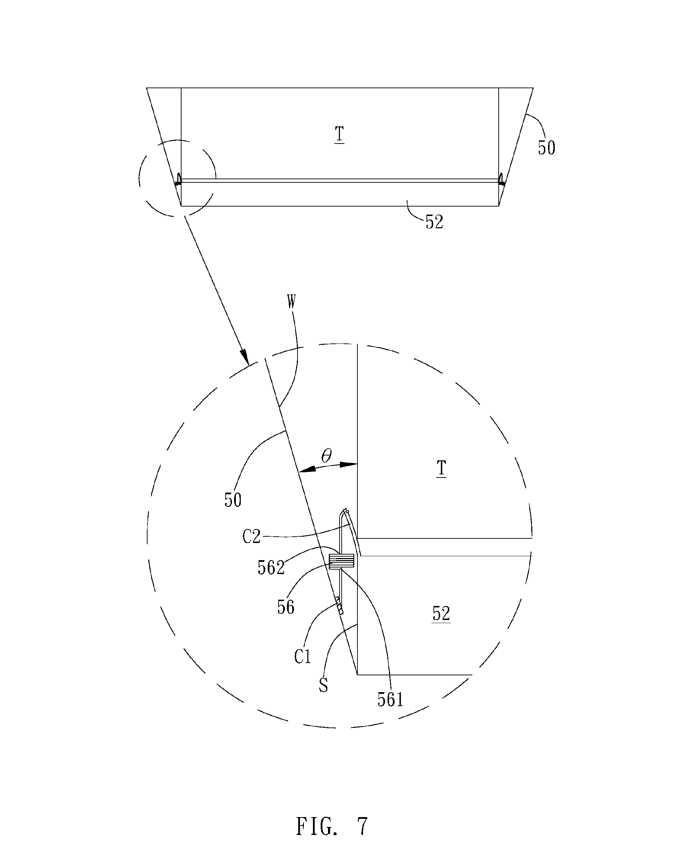

Please refer to FIG. 7. FIG. 7 illustrates a top view of an angle between the inner wall W of the panel 50 and the side surface S of the cover 52. As shown in FIG. 7, the panel 50 has two inner walls W at two sides of the CD-ROM opening. It should be noticed that because the elastic member 56 used in the invention is the extension spring, an angle θ will be existed between each inner wall W and the side surface S of the cover 52, and the second end 562 of the elastic member 56 may be connected with the second connecting member C2 of the cover 52 in the containing space between the inner wall W and the cover 52 without affecting the moving of the tray T. And, the first end 561 of the elastic member 56 can be also connected with the first connecting member C1 of the panel 50 in this containing space. In the embodiment, it is preferred that the angle θ ranges between 10° and 25°, but not limited to this.

Above all, the cover assembly of the embodiment uses two ends of the H-shaped rotating plate to connect with the panel and the cover respectively, and uses the motion of the extension spring and the H-shaped rotating plate to avoid the interference caused by the cover size to the rotation of the H-shaped rotating plate. Because the axle distance of the H-shaped rotating plate is smaller than that of the L-shaped rotating plate of the prior art, the shake generated by the rotation of the rotating plate can be reduced, and the H-shaped rotating plate can provide both rotation and movement. Compared to the prior art, the cover assembly of the embodiment has many advantages such as smaller tooling size, lower cost, lighter weight, simpler structure, and stably fixed and hard to shake and the optical disk device can be operated more smooth no matter it is under the open state or the closed state.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. A cover assembly of an optical disk device, disposed on an electronic apparatus, the cover assembly comprising:
a panel, disposed on the electronic apparatus, and the panel comprising an
opening corresponding to the optical disk device, the inner side of the panel comprising a first connection member;
a cover, disposed in front of the opening to shield the opening and the
optical disk device, and the cover comprising a second connection member;
a rotating plate, comprising a first pivoting member and a second pivoting
member, the first pivoting member connecting with the panel and the second pivoting member connecting with the cover, the first pivoting member and the second pivoting member being disposed at a first side and a second side of the rotating plate respectively, wherein the first side and the second side are opposite to each other; and
an elastic member, one end of the elastic member connecting with the first
connection member of the panel, and the other end of the elastic member connecting with the second connection member of the cover to make the cover back to its original position after the cover is released.

2. The cover assembly of claim 1, wherein the rotating plate is an H-shape rotating plate.

3. The cover assembly of claim 1, wherein the panel comprises a fixing member and the first pivoting member comprises a pivoting hole, the fixing member of the panel is pivoted with the pivoting hole of the first pivoting member.

4. The cover assembly of claim 1, wherein the cover comprises a movable member and the second pivoting member comprises a pivoting axis, the movable member of the cover is pivoted with the pivoting axis of the second pivoting member.

5. The cover assembly of claim 1, wherein the rotating plate further comprises another first pivoting member and another second pivoting member, the first pivoting member is disposed at one end of the first side of the rotating plate and the second pivoting member is disposed at one end of the second side of the rotating plate, the another first pivoting member is located on the other end of the first side of the rotating plate, and the another second pivoting member is located on the other end of the second side of the rotating plate.

6. The cover assembly of claim 1, wherein the elastic member is an extension spring.

7. The cover assembly of claim 6, wherein the elasticity modulus of the extension spring ranges between 1.0 gf/mm and 2.3 gf/mm.

8. The cover assembly of claim 1, wherein the cover comprises an open end, when the cover is rotated by a pushing force, the open end of the cover is rotated away from the panel from a first position to a second position, and the elastic member is driven by the cover and converted from an original state into a stretching state, when the cover is release, the elastic member is converted back to the original state from the stretching state to make the cover back to its original position.

9. The cover assembly of claim 8, wherein the cover further comprises a fixing end, the fixing end is connected with the panel, when the cover is acted by the pulling force, the open end of the cover is rotated about the fixing end.

10. The cover assembly of claim 8, wherein an angle smaller than or equal to 90° is existed between the first position and the second position.

11. The cover assembly of claim 1, wherein the panel comprises two inner walls at two sides of the opening, a containing space is existed between each inner wall and the cover, and the containing space is used for the other end of the elastic member connecting with the second connecting member of the cover.

12. The cover assembly of claim 11, wherein the cover comprises a side surface, and an angle between the each inner wall of the panel and the side surface of the cover ranges between 10° and 25°.
